# EUROPEAN PATENT SPECIFICATION

(11) **EP 3 295 047 B1**
(45) Date of publication and mention of the grant of the patent: **23.09.2020**
(21) Application number: 16726284.9
(22) Date of filing: 11.05.2016
(51) Int. Cl.: F16C 3/02, F16C 3/03

(54) **FIBRE REINFORCED POLYMER MATRIX COMPOSITE TORQUE TUBES OR SHAFTS**
TORSIONSROHRE ODER -WELLEN AUS FASERVERSTÄRKTEM POLYMERMATRIXVERBUND
TUBES OU ARBRES DE COUPLE COMPOSITES À MATRICE POLYMÈRE RENFORCÉE PAR DES FIBRES

(30) Priority: 11.05.2015 GB 201508021
(43) Date of publication of application: 21.03.2018
(73) Proprietor: Sigma Precision Components (UK) Limited, Sandiacre, Nottinghamshire NG10 5HU (GB)
(72) Inventor: HYSON, Graeme, Milton Keynes Buckinghamshire MK10 9LB (GB); BARNETT, Alastair, Royal Leamington Spa Warwickshire CV32 7QQ (GB); PAUL, Robert, Banbury Oxfordshire OX15 4RG (GB)
(74) Representative: Coulson, Elizabeth Eve
(86) International application number: PCT/EP2016/060606
(87) International publication number: WO 2016/180901

(56) References cited:
- WO-A1-2014/118480
- JP-A- H04 301 437
- US-A- 3 638 455
- US-A- 4 706 364

## Description

### FIELD OF THE INVENTION

This invention relates to fibre reinforced polymer matrix composite torque drive shafts or tubes suitable for transmitting torque, and to methods of manufacturing such torque tubes or shafts. Torque drive shafts are also commonly called "torsion shafts" or "torsion tubes".

The present invention relates specifically to torque shafts which comprise a hollow tube or hollow shaft made from a thermoplastic matrix in which reinforcing fibres are embedded and which is capable of transmitting torsional loads through the length of the tube.

### BACKGROUND OF THE INVENTION

Within the aeronautical, marine and automotive industries, there is a need for lightweight torque shafts to replace metal torque tubes and metal drive shafts. The need to reduce weight predicates the use of hollow tubes.

In one aeronautical application for the provision of control rods for driving moving parts in aircraft wings there may be many tens, if not more, of metal torque tubes for transmitting rotational movements to control surfaces of the wing. In automotive applications torque tubes are used for transmitting rotational power to the wheel or gear box of a vehicle, and for suspension anti-roll bars. It is common to use universal couplings to connect such torque tubes that lie at different angles to each other and to external couplings.

However it has been found to be difficult to fix end fittings to hollow composites to be able to replace metal torque tubes.

Prior known composite drive shafts usually incorporate metal or metallic end fittings to introduce loads into the main composite tube segment of the shaft. Metallic fittings are used because of the superior performance of metal under tri-axial and concentrated loads and because it is easier to manufacture small detail features such as bolt holes in metal parts.

Prior known torque tubes are usually made of thermosetting plastics materials (e.g. US 3 638 455). Two of the main failure modes of prior known composite drive shafts are introduced by these metallic end fittings, namely:
1. Slip of the metallic fitting leading to relative rotation of the fitting and the composite tube resulting in an inability to transmit torque; and
2. Gross failure (e.g. snapping) of the composite tube in the region immediately around the metallic fitting caused by the stress concentrating effect of the interface.

In typical prior known composite drive shafts metallic end fittings are connected to a thermosetting composite tube in one of several ways:
1. The end fitting is chemically bonded (e.g. glued) to the tube using an overlapping cylindrical interface;
2. Longitudinal channels are cut into the outside diameter of the composite wall of the tube forming a toothed or spline shaped profile, such that the tube mechanically mates with matching features on the fitting (e.g. as described in patent US7874925 B2);
3. Additional pins, rivets or similar are used to connect mechanically the fitting to the composite tube (e.g. as described in US 4185472 A); and
4. The tube has a positive mechanical interference with the fitting (e.g. as described in US20030207715).

The present invention seeks to mitigate the effects which lead to both of the above described failure modes.

The present invention proposes to use the method of manufacturing composite tubes as disclosed in copending International Patent application PCT/GB2015/050468, which application is by reference, incorporated herein in its entirety, to make a thermoplastic hollow tube or shaft which is further modified to permit the transmission of torsion throughout the length of the tube, and then modify the connection between the end fittings and the composite tube.

PCT/GB2015/050468 discloses a method of manufacturing hollow fibre reinforced polymer matrix composite tubes in which a circular braided fabric is embedded in a thermoplastic polymer matrix. The braided fabric is formed either as a hollow tubular structure without any internal support, or is formed by weaving the braiding threads on to a central temporary mandrel that is later discarded. In the present invention a temporary central supporting mandrel may be used as will be explained hereinafter.

An object of the present invention is to be able to form a torque shaft that has a fibre reinforced thermoplastic polymer matrix torsion tube to which is fitted end fittings capable of transmitting torque without slipping occurring between the end fittings and the tube.

A further object of the present invention is to provide a method of manufacturing a rigid self-supporting thermoplastic composite hollow torque tube that is reinforced with one or more circular braided reinforcing fabrics and which has a thermoplastic deformable region adjacent to, or forming, a bore of the tube that is susceptible to receiving an end fitting that allows torsion loads to be transmitted throughout the length of the tube.

A further object of the present invention is to provide a method of manufacturing a rigid self-supporting hollow thermoplastic composite torque tube that is reinforced with one or more circular braided reinforcing fabrics embedded in a thermoplastic matrix, using precursor tapes to form a thermoplastic deformable region adjacent a bore of the tube, and tows of co-mingled thermoplastic filaments and reinforcing fibres that can be compressed to consolidate the thermoplastic matrix using an outer heat-shrink layer.

A further object is to provide a composite torque tube that is interchangeable with metal or metallic tubes or shafts in most circumstances where metal or metallic torque tubes or shafts are used.

### SUMMARY

According to the present invention there is provided a torque shaft comprising a hollow tube provided with an end fitting at each end of the tube, wherein the tube is made of a thermoplastic polymer matrix with reinforcing fibres embedded in the matrix, and the tube and end fittings are connected by mutually complementarily shaped plug and socket connections that are interference fitted by thermoplastically and/or mechanically deforming the ends of the tube into contact with the end fittings. According to another aspect of the present invention there is provided a torque shaft comprising a hollow tube provided with an end fitting at each end of the tube, wherein the tube is made of a thermoplastic polymer matrix with reinforcing fibres embedded in the matrix, and the tube and end fittings are connected by a mutually complementarily shaped polygonal plug and socket connection that is interference fitted by thermoplastically deforming the ends of the tube into contact with the end fittings. Optionally, the ends of the tube are deformed such that an exterior surface of a deformed end and an interior surface of the deformed end are deformed in a similar and/or complementary manner to one another. Optionally, the tube is provided with a shaped plug and the end fittings are provided with a complementary shaped socket. The ends of the tube are deformed such that the cross-sectional shape of the deformed ends is an undulated annulus with peaks and troughs following a generally sinusoidal wave form. Optionally, the amplitude between a peak and a trough of said undulated annulus shaped deformed ends is between about 0.2mm and about 0.5mm. Optionally, a pitch between a peak and an adjacent peak of said undulated annulus shaped deformed ends is between about 12° and about 24°. Optionally, a total number of peaks of said undulated annulus shaped deformed ends is between about 15 and about 30. Optionally, the ends of the tube are mechanically deformed only, without the addition of heat above room temperature, and wherein the ends of the tube are push-fitted into the end fittings. Optionally, each end fitting comprises a socket, at least part of which has a thickness that is less than the thickness of a circular section of the composite tube, such that the end of the composite tube is interference fitted into the socket. Optionally, the socket is defined by an interior wall of an outer cylindrical barrel and an exterior wall of an inner cylindrical barrel, wherein the interior wall and exterior wall each have corresponding sections that are profiled into a generally sinusoidal wave form such that a cross-sectional shape of said socket is an undulated annulus with peaks and troughs following a generally sinusoidal wave form.
Optionally, at least a portion of the interior wall and a corresponding portion of the exterior wall have the same number of peaks, the same number of troughs and wherein the pitch between each peak on the interior wall is greater than the pitch between each peak on the exterior wall. Optionally, the amplitude of the general sinusoidal wave form provided on the interior wall and exterior wall gradually increases from a first amplitude proximate an open end of the socket to a maximum amplitude proximate a flanged bottom section of the end fitting housing the socket. Optionally, the first amplitude is zero and the depth of the socket proximate an open end of the socket is about equal to the thickness of a circular section of the composite tube; and wherein the maximum amplitude is greater than about 0.2mm such that a maximum depth of the socket proximate a flanged bottom section of the end fitting is less than the thickness of a circular section of the composite tube. Optionally, the maximum depth of the socket proximate a flanged bottom section of the end fitting is about 0.05mm less than the thickness of a circular section of the composite tube. Optionally, the end fittings are provided by two affixed parts: a first part comprising an outer cylindrical barrel an interior surface of which provides a first socket wall; and a second part comprising an internal plug, an exterior surface of which provides a second socket wall. Optionally, the end fittings are provided as a unitary one piece construction. Optionally, a socket wall is provided with an axial retention means. Optionally, said axial retention means takes the form of one or more barbs projecting from a wall of the socket. Optionally, the tube is provided with a polygonal plug and the end fittings are provided with a complementary shaped polygonal socket. Alternatively, the tube is provided with a polygonal socket and the end fittings are provided with a complementary shaped polygonal plug. Each end fitting may be provided with a first cylindrical collar that extends circumferentially around the outside circumference of a part of the end of the tube. If desired, each end fitting is provided with a second cylindrical collar that extends around the outer circumference of the first collar. In some embodiments each end of the tube has a first cylindrical collar that is fitted inside of the bore of the tube and extends circumferentially around the inside circumference of a part of the end of the tube. Preferably the first collar has an outer profile that is of a complementary shape to the bore of the tube. Each end fitting may be provided with a second cylindrical collar that is fitted inside of the bore of the first collar and extends circumferentially around the inside circumference of a part first collar. Optionally, the reinforcing fibres are selected from carbon fibres, glass fibres, a poly-paraphenylene-terephtalamide-based fibre, an aliphatic polyamide, silicon carbide coated carbon fibres, synthetic textile fibres, natural textile fibres, or metal wires, or a mixture of two or more of these reinforcing fibres. The fibres may be selected from continuous fibres, discontinuous fibres, chopped fibres, monofilaments, woven threads, or yarns. Optionally, the thermoplastic material is selected from one or more of polyetheretherketone (PEEK), polyaryletherketone (PAEK), polyetherketone (PEK), polyoxymethylene (POM), polyphenylenesulphide (PPS), polyethyleneimine (PEI), Polyacrylamide (PA), or a mixture of two or more of these thermoplastics According to a further aspect of the invention, there is provided a method of manufacturing a torque shaft comprising the steps of
(a) providing a fibre reinforced thermoplastic polymer tube;
(b) providing an end fitting at each end of the tube;
(c) thermoplastically and/or mechanically deforming each end of the tube to form one component of a mutually complementary shaped plug and socket connection;
(d) providing each end fitting with a second component of the plug and socket connection, the plug and socket being dimensioned, positioned, and arranged so as to enable an interference fit therebetween; and,
(f) forming an interference fit between the tube and each end fitting.
Optionally, step (c) comprises thermoplastically and mechanically deforming each end of the tube to form one component of a mutually complementary polygonal shaped plug and socket connection. Optionally, step (c) comprises mechanically deforming each end of the tube to form the plug of a mutually complementary generally sinusoidal wave form shaped plug and socket connection.

Within the scope of this application it is envisaged that the various aspects, embodiments, examples, features and alternatives set out in the preceding paragraphs, in the claims and/or in the following description and drawings may be taken independently or in any combination thereof. For example, features described in connection with one embodiment are applicable to all embodiments unless there is incompatibility of features.

### BRIEF DESCRIPTION OF THE DRAWINGS

Embodiments of the present disclosure will now be described by way of example, with reference to the accompanying drawings, in which:-
**Fig 1** is a general assembly view of a torque shaft that incorporates a composite torque tube;
**Figs 2 and 3** show the ends of the tube of Fig 1 before and after the ends are deformed to receive the end fittings that are not part of the invention;
**Fig 4** shows a prior known way of fixing end fittings to a thermo-setting plastic composite torque tube;
**Fig 5** shows a longitudinal cross sectional view of one torque shaft not part of the present invention and shows the interface between an end fitting and the torque tube shown in Fig 1;
**Figs 6 to 8** show longitudinal cross sectional views of three embodiments and show connections between various end fittings and a torque tube that are not part of the invention;
**Figs 9 to 14** illustrate schematically the forces and reaction forces between an end fitting and a fibre reinforced composite torque tube not part of the present invention resulting by the application of torque to the end fitting of the drive shaft shown in Fig 1;
**Figs 15 to 19** illustrate a method of manufacture of a fibre reinforced polymer composite tube of the drive shaft of
Fig 1;

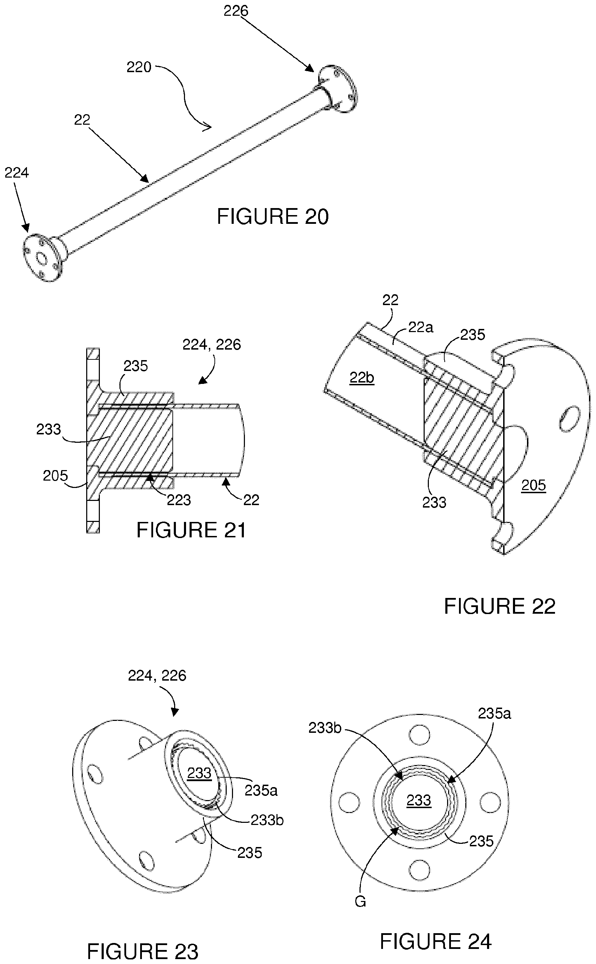

**Fig 20** shows a transmission shaft having a composite tube and an end fitting at each end according to various embodiments;
**Figs 21 and 22** show cross-sectional and cut-away views through a two-part end-fitting which comprises a first piece having a shaped inner surface; and a second piece providing an internal plug having a shaped external surface; wherein an end of the composite tube has been interference fitted into and deformed by the socket formed between the first piece and the shaped internal plug;
**Fig 23** is a perspective view of the two-part end fitting of Figs 20 to 22, wherein the shaped internal plug is located within the outer collar to form a socket;
**Fig 24** is a plan view from the top of the two-part end fitting of Fig 23;

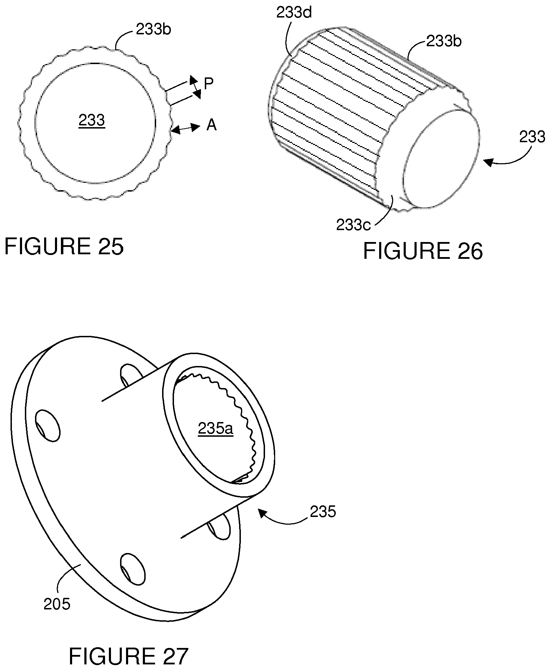

**Fig 25** is a plan view from the top of the shaped internal plug of Figs 23 and 24;
**Fig 26** is a perspective view of the shaped internal plug of Figs 23 to 25 showing the undulated or wavy form of the outer surface;
**Fig. 27** is a perspective view of the first piece of the two-part end fitting of Fig 23;

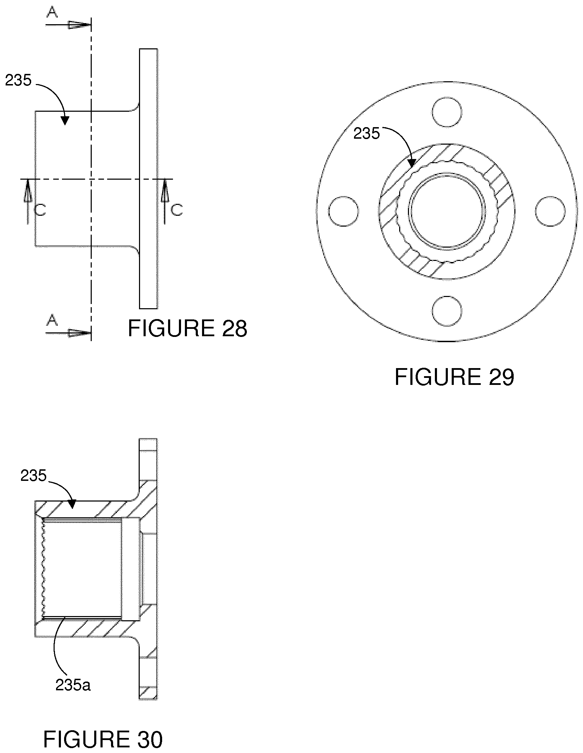

**Fig 28** is a side view of the first piece of Fig 27;
**Fig 29** is a cross-section of the first piece of Fig 28 taken along the line A-A;
**Fig 30** is a cross-section of the first piece of Fig 28 taken along the line C-C;

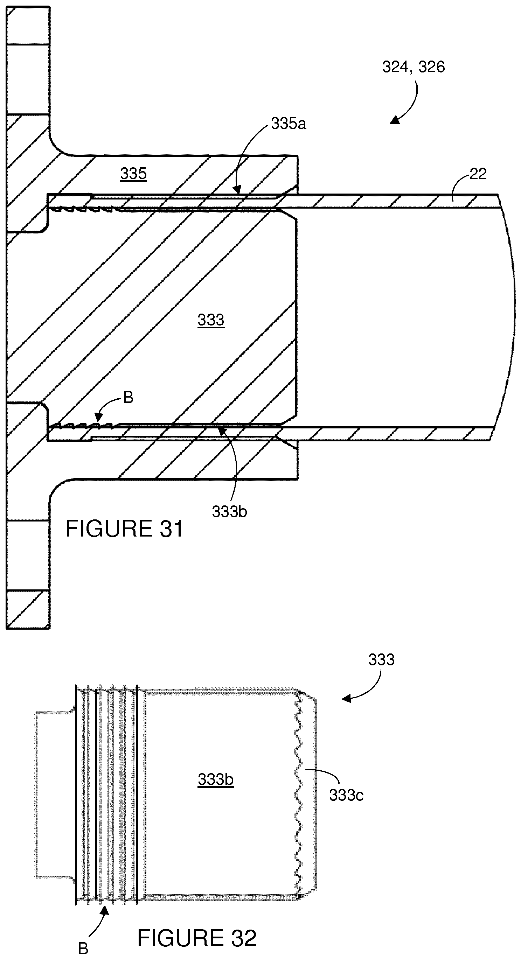

**Fig 31** is a cross-section through a two-part end fitting similar to that of Fig 23, additionally comprising axial retaining means in the form of barbs provided circumferentially about the shaped internal plug;
**Fig 32** is a side view of a shaped internal plug comprising axial retaining means in the form of barbs provided circumferentially about a bottom end of the internal plug;

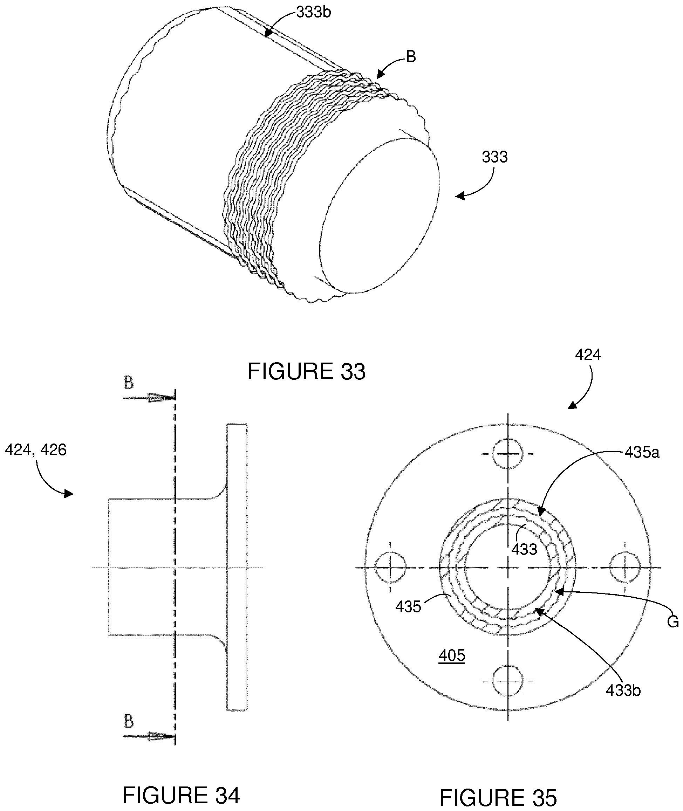

**Fig 33** is a perspective view of the internal plug of Figs 31 and 32 showing circumferential undulations along a substantial portion of an external surface of the internal plug and showing barbs provided circumferentially about a bottom portion of the external surface of the internal plug;
**Fig 34** shows a side view of a unitary one-piece end-fitting having a shaped socket defined by an outer collar having a profiled interior surface and an integrally provided internal plug portion having a profiled external surface;
**Fig 35** is a cross-section taken along the line B-B shown in Fig 34;

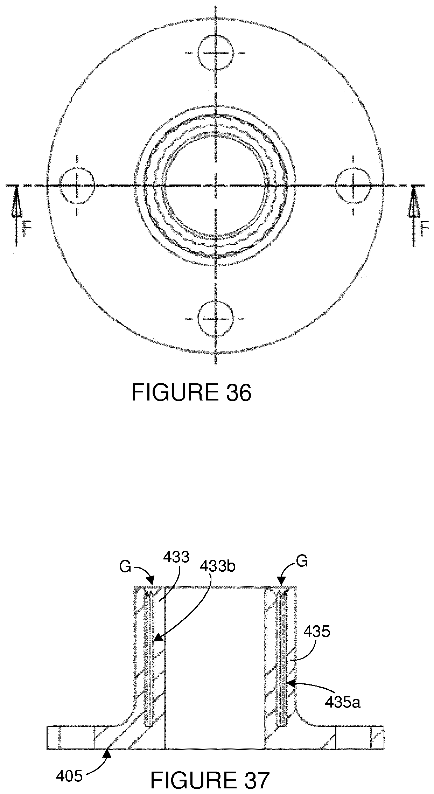

**Fig 36** is a plan view from the top of the unitary one-piece end-fitting of Figs 34 and 35;
**Fig 37** is a cross-section taken along the line F-F shown in Fig 36;

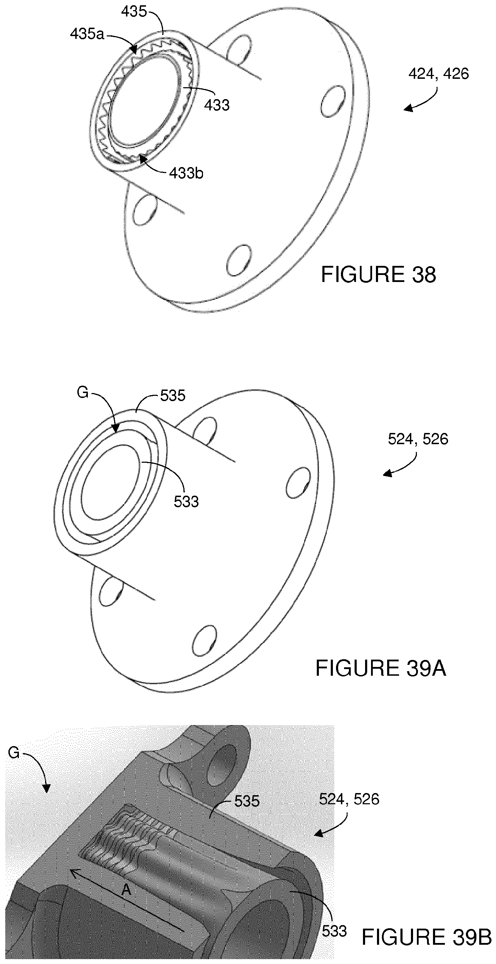

**Fig. 38** is a perspective view of the unitary one-piece end-fitting of Figs 34 to 37;
**Fig 39A** is a perspective view of a unitary one-piece end-fitting of further various embodiments, wherein a flared region is provided at the entry opening of the one-piece end fitting; and wherein an axial retaining means is provided at the opposite, bottom, end of the one-piece end fitting;
**Fig 39B** is a partial perspective view of the unitary one-piece end-fitting of further various embodiments, wherein a flared region is provided at the entry opening of the one-piece end fitting; and wherein an axial retaining means is provided at the opposite, bottom, end of the one-piece end fitting; and wherein a wave form profiled into the walls of the end-fitting socket gradually and progressively develops in a longitudinal direction toward the flange end of the socket;

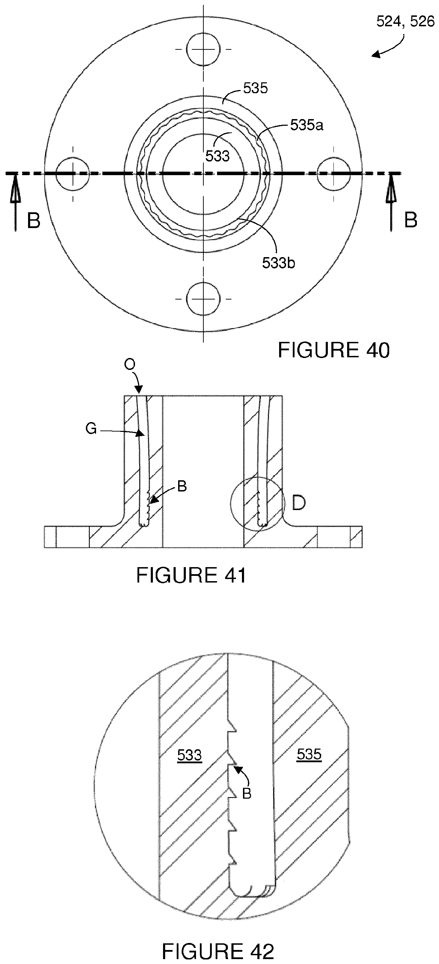

**Fig 40** is a plan view from the top of the unitary one-piece end-fitting of Fig 39A;
**Fig 41** is a cross-section taken along the line B-B shown in Fig 40;
**Fig 42** is an enlarged view of the detail indicated by "D" in Fig 41;

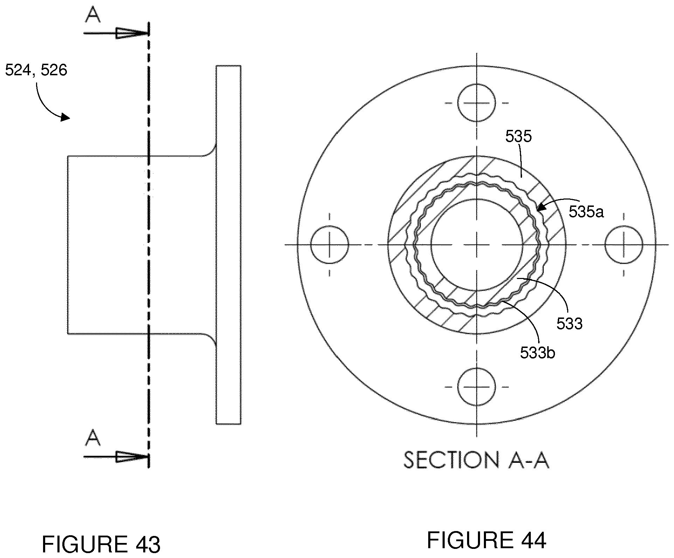

**Fig 43** is a side view of the unitary one-piece end-fitting of Figs 39A to 42; and
**Fig 44** is a cross-section taken along the line A-A shown in Fig 43.

### DETAILED DESCRIPTION OF EMBODIMENTS

Detailed descriptions of specific embodiments of the torque shafts, end fittings and methods are disclosed herein. It will be understood that the disclosed embodiments are merely examples of the way in which certain aspects of the invention can be implemented and do not represent an exhaustive list of all of the ways the invention may be embodied. As used herein, the word "exemplary" is used expansively to refer to embodiments that serve as illustrations, specimens, models, or patterns. Indeed, it will be understood that the torque shafts, end fittings and methods described herein may be embodied in various and alternative forms. The Figs are not necessarily to scale and some features may be exaggerated or minimised to show details of particular components. Well-known components, materials or methods are not necessarily described in great detail in order to avoid obscuring the present disclosure. Any specific structural and functional details disclosed herein are not to be interpreted as limiting, but merely as a basis for the claims and as a representative basis for teaching one skilled in the art to variously employ the invention.

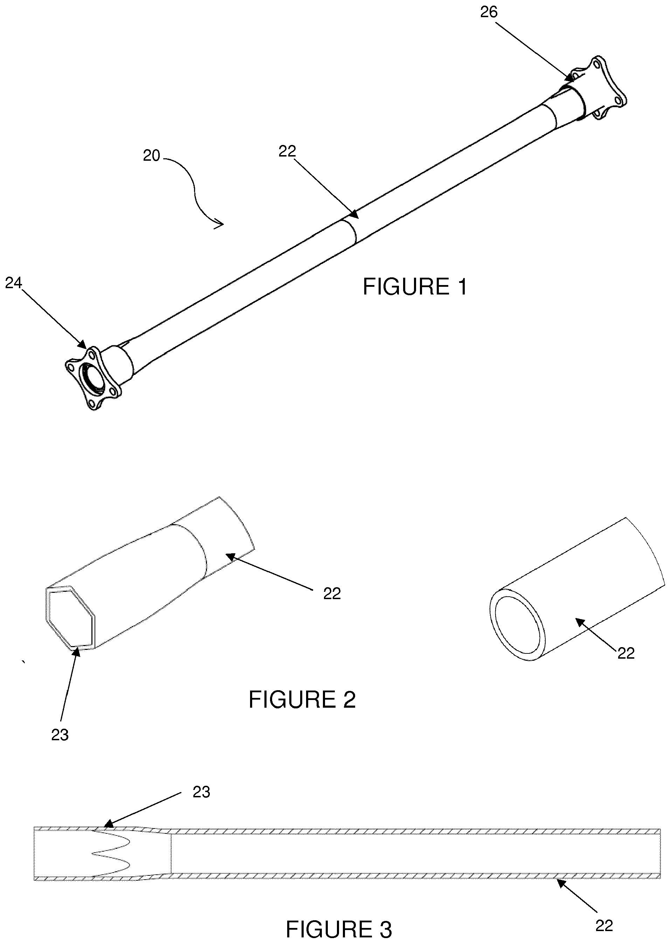

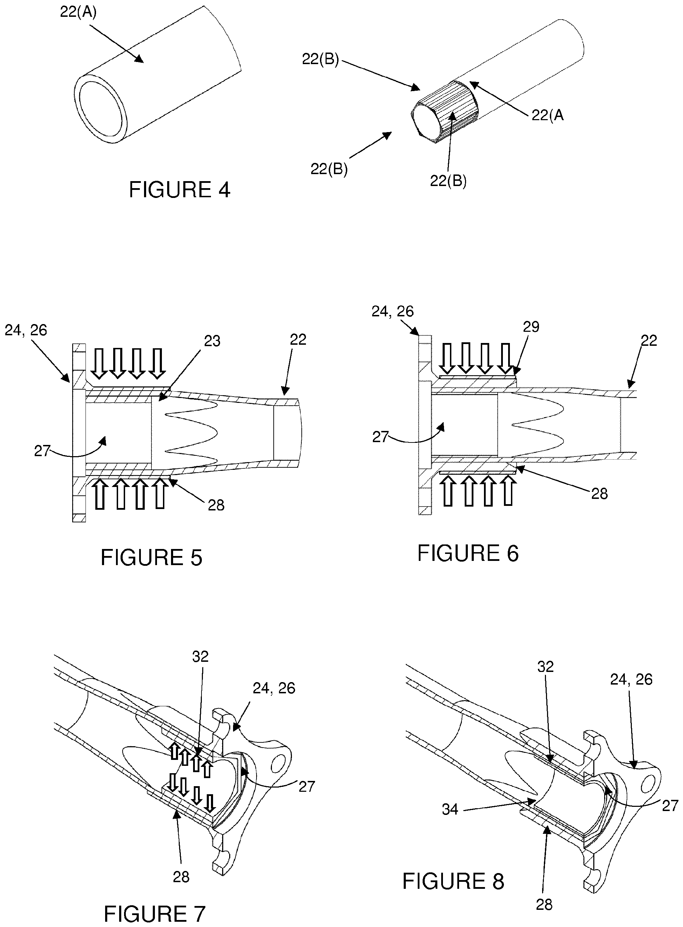

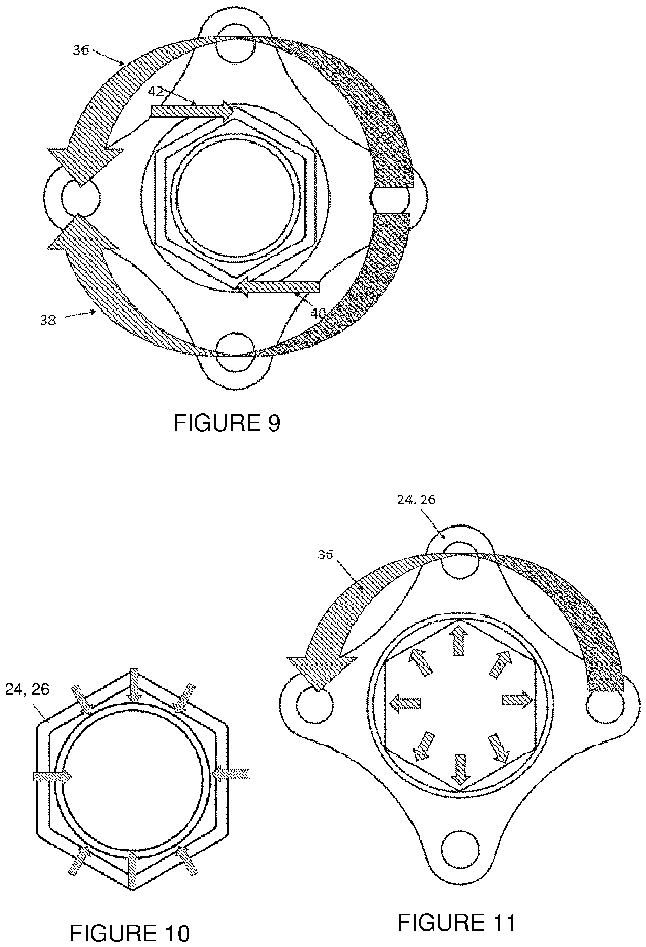

Referring in more detail to the drawings, Figs 1 to 3 and 5 to 9 show a hollow composite drive shaft 20 constructed not in accordance with the present invention. The drive shaft 20 comprises a fibre reinforced thermoplastic polymer matrix composite tube 22 having a metal, or metallic, end fitting 24, 26 secured at each end of the tube 22. Each end fitting 24, 26 has a socket 27 which is of polygonal cross section normal to the longitudinal axis of the fitting 24, 26 (see Figs 5 to 9).

The ends of the tube 22 are thermo-plastically formed to form a plug 23 (see Figs 2 and 3) that is of complementary polygonal shape to the polygonal socket 27 of the end fittings 24, 26. The tube 22 is deformed to make the plug shape either when the tube is in the "green" state or after.

The plug 23 and socket 27 are dimensioned, positioned and arranged relative to each other to enable the plug 23 to be press fitted into the socket 27 and form an interference fit.

The end fittings 24, 26 are secured to the ends of the tube 22 by offering up the plug 23 of the tube 22 to the socket 27 of the end fittings 24, 26 and press fitting it into interference fit between the plug 23 and socket 27.

In the prior known example illustrated in Fig 4, the tube 22(A) is manufactured as a laminated thermo-setting plastic structure that has been machined on its outer circumference to form a hexagonal shape 22(B). The machining severely weakens the structure of the tube 22(A) and results in a loss of strength. This loss is caused by four effects:
1. Removing material means that the remaining tube material must operate at higher stress in order to transmit the same torque.
2. The machining process generates incomplete plies in the interface region; therefore the end fitting is only partially loading each ply. Depending on interface geometry it may not load some plies at all. This results in sub-optimal load transmission into the main tube region. In plain cylindrical tubes which use a non-machined glued interface this effect is greatly magnified, the glued fitting only interfaces with the surface ply of the tube.
3. The interface region is a smaller diameter than the main tube body. Torsional stresses are proportional to the fourth power of radius, so only a small decrease in diameter causes a large decrease in strength.
4. The tight radii resulting from machining result in stress concentrations.

These same principals apply to prior known interfaces which use pins and splines as discussed above.

To account for these effects, prior known shafts must either incorporate additional otherwise redundant strength in the body of the tube or must use a laminate design that alters the interface regions of the composite tube (such as those described in US 7731593). Both of these methods result in a sub-optimal weight shaft that is more complicated to manufacture.

In contrast, the present invention mitigates these problems in that it does not require machining of the composite tube 22 and does not weaken the drive shaft 20. The proposed method of the present invention uses a thermoplastic tube 22 that is thermoplastically and/or mechanically deformed at the interface region without any machining processes. Such a forming process addresses the limitation of current technology in the following ways:
(a) No material is removed during forming.
(b) All plies are retained and the tube laminated structure is maintained. The end fitting 24, 26 can apply torsional loads to the entire tube wall thickness.
(c) The interface region may be a larger diameter than the main tube body. Therefore any reduction in torsional strength caused by moving away from the optimal circular profile may be counteracted with increased section diameter.
(d) There may be no tight internal radii which may result in stress concentrations.

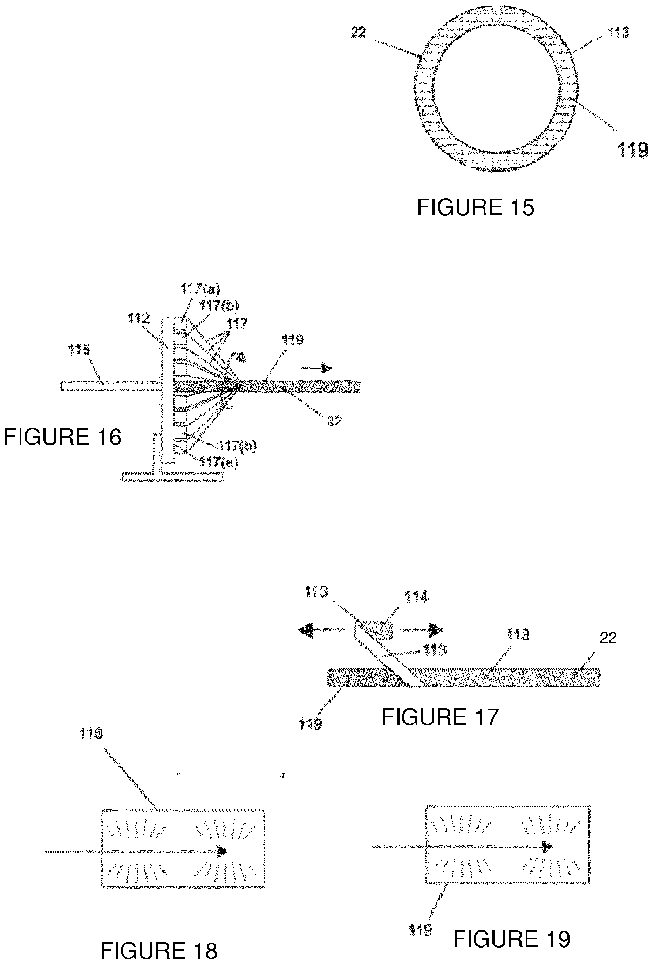

Figs 2 and 3 show the ends of the tube 22 before and after forming the polygonal plug 23 at the outer circumference of the tube 22 that confronts a complementary shaped polygonal socket 27 in the bore of each end fitting 24, 26. The tube 22 is manufactured in accordance with the method shown in Figs 15 to 18 so that in the green state it has a cylindrical shape as shown in Fig 2.

Referring to Fig 15 there is shown, schematically, a cross sectional view of a rigid composite torque tube 22 manufactured in accordance with the present invention. In the finished state the tube 22 has a wall structure that is predominantly made of braided fibre-reinforcing fibres embedded in a thermoplastic matrix. The outer diameter of the torque tube in the present example is between 0.25 inches (6mm) up to 2.0 inches (50mm). Clearly the invention is not restricted to this range of sizes, and the maximum diameter is wholly dependent on the size and design of the circular braiding machine and the intended use of the tube 22.

The fibre reinforced thermoplastic circumferential zone of the tube 22 is manufactured by braiding a plurality of tows or tapes 117 of co-mingled thermoplastic filament and reinforcing fibres or filaments on to the outer surface of a mandrel 115.

In the present example, the mandrel 115 is made of metal and is of circular cross-section. The cross-sectional shape of the mandrel 15 could be ogival, or oval, or elliptical, providing that the tape 114, or tow 114, can be wound tightly on the outer surface of the mandrel 115, although, for applications where the drive shaft 20 is to be used in high rotational speeds consideration must be given to the need to be able to balance the shaft 20.

The mandrel 115 is coated on its outer surface with a mould release agent (not shown), such as for example, a polytetrafluoroethylene (PTFE) based coating, to facilitate removal of the mandrel 115 from the inside of the tube 22.

The mandrel 115 is inserted into a circular braiding machine 112 of the type made by OMA Sri under the model number 48/1-014HC 9 shown schematically in Fig 16). This is a horizontal-axis braiding machine 112 that has two sets of carriers 117(a), 117(b) on which the braiding threads or yarns 117 are carried. There are forty-eight carriers in each set; one set 117(a) rotates clockwise about a common horizontal central axis 118 whilst the other set 117(b) rotates anticlockwise about the same axis 118. The carriers 117(a), 117(b) are deflected in radial directions to cause the braiding threads 117 of one set to pass under the braiding threads 117 of one or more of the other set.

We prefer to use tows 117 comprising co-mingled carbon fibres and PEEK containing approximately 3000 carbon fibres and 2000 PEEK filaments as supplied by Concordia Inc. The tows 117 may comprise a blend of typically 60% to 80% by volume of continuous lengths of carbon fibres, or more co-mingled with PEEK filaments. It may be possible to use tows that are 100% continuous carbon fibres.

We prefer to form two or more braided layers 119 by braiding additional layers 119 onto previously braided layers 119.

It is to be understood that although we prefer to have a wall structure comprising one or more layers of braided reinforcing fibres in a thermoplastic matrix, one could make the wall of the tube 22 with additional thermoplastic layers, which may or may not include reinforcing fibres, such as for example wound filaments or fibre.

When a sufficient wall thickness tube has been laid up, the tube 22 together with the mandrel 115 is removed from the circumferential braiding machine 112, and the outer circumference of the tube 22 is covered by a layer of a heat-shrink material 113 as shown in Fig 17. The preferred heat shrink material 113 is a polyimide tape that is 19mm (0.75 inches) wide and 50 microns thick. The heat-shrink tape 113 is wound under tension onto the outside of the of the braided layer or layers 119 at a pitch of 2.5mm using a filament winding machine 114 (shown schematically in Fig 2). The tape 113 completely covers the outer surface of the layer of braided reinforcement. Different widths or thicknesses of tapes 113 can be used for producing larger or smaller diameter torque tubes 22.

In the present example, a discrete length of the tube 22 with the heat shrink material 113 in place, together with the mandrel 115 is removed from the filament-winding machine 114 used to wind the tape 113 onto the mandrel 115, and placed in an oven 118 (shown in Fig 17) and heated to a temperature in the region of 350°C to 450°C. This causes the thermoplastic material (PEEK) to melt and the heat shrink tape 113 to shrink onto the outer surface of the layer 112 and compress the molten PEEK and squeeze it into the carbon fibre braided reinforcement. This compression embeds the braided fabrics 119 into the PEEK matrix to form the torque tube 22 shown in Fig 15 (and also shown in Fig 2).

Thus, the tube 22 is effectively made in two steps namely, firstly by forming a semi-rigid unfinished "green" state tube that is self-supporting, and then fabricating the tube into the finished shape by heating the tube in the heating means 118.

The ends of the tube 22 are modified to form the plug 23 or socket 27 by re-heating them to a temperature at which the thermoplastic matrix is softened to form the plug or socket, but not sufficient for the tube 22 to lose its shape or rigidity. Reheating is achieved by providing a heating means 119 shown schematically in Fig 19.

When the ends of the tube, at least in the region where the tube 22 is to be connected to the end fittings 24, 26, is softened, they are formed to a desired shape to form the polygonal plug 23 or socket 27. This is done by using a pre-shaped tool (not shown) to mould the tube to the desired shape for receiving the end fitting. It may be possible to heat the end of fitting 24, 26 to the appropriate temperature and use the end fitting 24, 26 as a moulding tool.

In the case of where the tube 22 is to be used as a roll bar or torsion tube in a vehicle suspension system other regions of the tube 22 could be heated to soften the tube to enable the tube to be bent to the shape of the roll bar.

The heating means 118, 119 may comprise radiant heaters, induction heaters (in this case where the reinforcing fibres are those that are susceptible to induction heating (such as for example carbon fibres), by infrared heaters, or by ultrasonic or high frequency heating devices, When the tube 22 is fitted to the end fittings 24, 26 it is allowed to cool so as to retain its shape.

The end fittings 24, 26 for connecting the drive shaft 20 to other torque shafts (whether metal or composite torque tubes) or to a dive source {not shown) or gear box (not shown), or to other structures (such as, for example, anchor points of a suspension anti-roll bars for vehicles, are formed on the ends of the torque tube 22 in the manner described above. This may be done either when the tube 22 is in the "green" state or when it is finished by re-heating the finished tube.

The heat shrink layer 113 is preferably removed from the outside of the torque tube 22, or it could be left in place on the tube 22.

In the above-mentioned example, the thermoplastic material is PEEK but other thermoplastic materials could be used to form the matrix. For example the thermoplastic may be selected from one or more of polyetheretherketone (PEEK), polyaryletherketone (PAEK), polyetherketone (PEK), polyoxymethylene (POM), polyphenylenesulphide (PPS), polyethyleneimine (PEI), Polylamide (PA), Polypropylene (PP) or a mixture of two or more of these thermoplastics.

If desired, other natural or synthetic fibres or filaments may be used as the reinforcement of the matrix. For example, the reinforcement fibres may be carbon fibres, glass fibres, a polyparaphenylene-terephtalamide-based fibre (for example, the type known as KEVLAR ® (a Registered trademark of E. I. du Pont de Nemours and Company)), an aliphatic polyamide (such as for example Nylon (a Registered Trade Mark of E. I. du Pont de Nemours and Company), silicon carbide coated carbon fibres, synthetic or natural textile fibres. Whilst we prefer to use continuous fibres for reinforcement, it is possible to use discontinuous or chopped fibres (such as chopped carbon fibres) such as that used in the precursor tapes supplied by Schape Sri under the name TPFL thermopreg. Indeed, it is also possible to use monofilaments, woven threads or yarns (for example, Kevlar ® spun or woven threads).

In the above-described method, a discrete length of the tube 22 is made, and this may be cut into shorter lengths if desired before forming the plug 23 or socket 27, or before bending the torque tube 22 into desired shapes, such as, for example, to make anti-roll bars.

In accordance with the present embodiment the connection between the end tube 22 and the end fittings 24, 26 comprise a polygonal plug 23 and socket 27 connection. Whilst it is preferred that the outer circumference of the ends of the tube 22 has a polygonal plug 23 and the end fittings 24, 26 have the polygonal socket 27, it may be possible to construct the inner bore of the tube 22 with the polygonal socket 27 that mates with a complementary shaped polygonal plug 23 provided on each end fitting 24, 26. In the latter case, the tube 22 would need to be thermoplastically expanded radially outwards using a tool inserted into the bore of the tube 22 to form the polygonal socket 27. An external collar (not shown) but similar to the collar 28 would be provided to provide a radially inwards force on the tube 22 to form an interference fit. A rigid internal collar (not shown) would be press fitted into the bore of tube 22 to support the tube 22 against the forces exerted by the external collar and thereby form an interference fit between the tube and the fittings 24, 26.

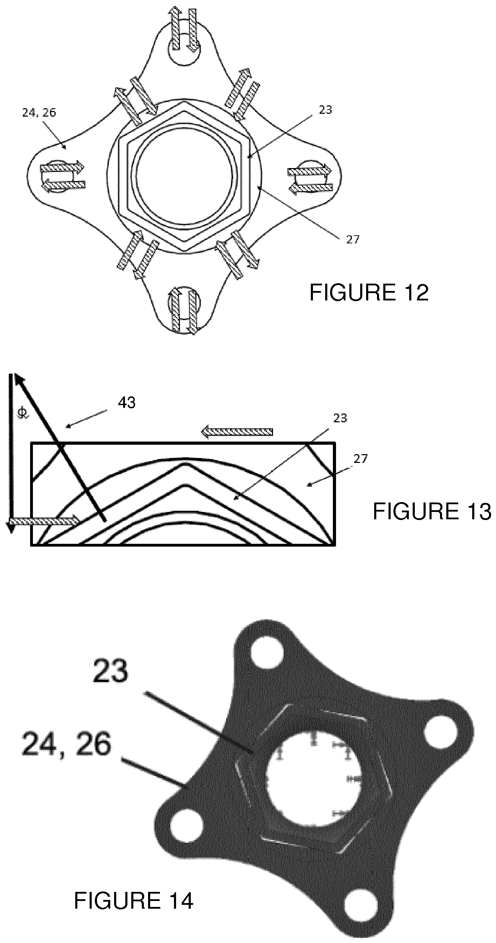

Referring now to Figs 20 to 44, there is shown additional embodiments of the present disclosure. In these additional, illustrated embodiments, like numerals have, where possible, been used to denote like parts, albeit with the addition of the prefix "200", "300" and so on to indicate that these features belong to the additional embodiments. The additional embodiments may share common features with earlier embodiments and therefore only the differences from the embodiments illustrated in Figs 1 to 3 and 5 to 19 will be described in any greater detail.

Turning now to Figs 20 - 30, there is shown a system 220, comprising a composite tube 22 between two end fittings 224. The end fitting 224, 226 provides a shaping socket into which a composite tube can be interference-fitted and by which the end of the composite tube can be re-shaped such that the composite tube 22 comprises a matching "plug"-shaped end that fits and mates with the socket formed by the end fitting 224, 226. The end-fittings 224, 226 are formed from two-parts, each having a sine wave shaping and arranged such that the composite shaft 22 is forced and deformed into a wave form shape circumferentially about the end of the composite shaft 22.

In Fig 20 the system 220, comprising a composite tube 22 between two end fittings 224, 226, which may form a transmission shaft 220, is shown. As with earlier embodiments, the system 220 forms a lightweight transmission shaft 220 which may be used to transmit torque in power transmission or other applications.

Each end fitting 224, 226 is an optional two-piece construction comprising a first piece 205/235; and a second piece 233. The first piece comprises a flange 205 and a cylindrical barrel 235 integrally formed with and upstanding from the flange 205 (see Figs 21, 22, 23 and 24 in particular). The flange 205 may be of a standard form, size and dimension to enable it to be compatible with other fixings within a drive line assembly or aeronautical application. The first piece 205/235 is preferably formed of metal, even more preferably, stainless steel. The second piece 233, which may be referred to as an internal unit 233 or internal plug 233 is also formed of metal, for example stainless steel. The second piece 233 may be solid or hollow in construction. The internal unit 233 may be shaped (optionally at a bottom end 233c - see Fig 26) to locate within the flange 205 of the first piece 205/235 such that the two pieces 205/235, 233 can be securely affixed together, for example by means of welding.

In Fig 27 a perspective view of the first piece 205/235 of the two-part end fitting is shown; and a side view is provided in Fig 28. In Fig 29 a cross-section of the first part 235/205 taken along the line A-A in Fig 28 is shown.

The interior surface 235a of at least a portion of the cylindrical barrel 235 is profiled. A wave form is machined circumferentially within, into or onto at least a substantial portion of the interior surface 235a. The "wave form" is generally sinusoidal, such that the profiled portion of the interior surface 235a has a series of peaks and troughs arranged circumferentially thereabout. The wave form is repeated along a length of the cylindrical barrel 235 to create a profiled region on the surface 235a thereof. Optionally, the generally sinusoidal wave form may have a constant pitch between adjacent peaks. The pitch may be between about 12° and about 24°. Optionally, and independence upon the size of the end fitting 224, 226, the pitch may be selected such that there are between about 15 and about 30 waves disposed circumferentially.

The exterior surface 233b of at least a portion of the internal unit 233 is profiled. In the present embodiment, a wave form is machined circumferentially within, into or onto at least a substantial portion of the exterior surface 233b (see Figs 25 and 26). The "wave form" is generally sinusoidal, such that the profiled portion of the exterior surface 233b has a series of peaks and troughs arranged circumferentially thereabout. The wave form is repeated along a length of the internal unit 233 to create a profiled region on the surface 233b thereof. Optionally, the generally sinusoidal wave form may have a constant pitch between adjacent peaks. Optionally, and independence upon the size of the end fitting 224, 226, the pitch may be selected such that there are between about 15 and about 30 waves disposed circumferentially. The shape, size, form, pitch, amplitude and number of waves profiled onto the exterior and interior surfaces 233b, 235a is done in a complementary manner. The internal unit 233 is arranged to fit or be located within the flange 205 of the first piece 205/235 such that the wave forms on each of the interior surface 235a and exterior surface 233b are aligned or otherwise matched such that a gap G between them provides a shaped socket. The shaped socket G has a circumferential cross-sectional shape that is an undulated annulus, i.e. a ring of waves with matching peaks and troughs on its inner and outer edges. This is shown in Fig 24 wherein a top plan view of the end fitting 224, 226 is shown. It will be understood therefore that to create a gap G that has a cross-sectional shape that is a wavy annulus, that the number of peaks and troughs machined on the interior surface 235a and exterior surface 233b will be the same, but the pitch between peaks; may be different (owing to the differences in the circumferential distance (path length) covered by the wave forms on the larger diameter interior surface 235a and smaller diameter exterior surface 233b).

As shown in Figs 23 and 24, it can be seen that an interior surface 235a of the cylindrical barrel 235 is spaced from an exterior surface 233b of the internal plug 233. The distance G between the interior surface 235a and exterior surface 233b may or may not be constant or uniform due to shaping of the interior surface 235a and exterior surface 233b. However, in the present arrangement, the distance G between the interior surface 235a and exterior surface 233b is substantially uniform and may be selected to ensure an interference fit between an end 223 of a tube 22 and the end fitting 224, 226.

Optionally, in some arrangements the two-piece assembly 205/235, 233 may be structured and arranged to incorporate an interference of about 0.05mm. In other words, the distance G between the exterior surface 233b and the interior surface 235a is generally about 0.05mm less than the thickness of the composite tube 22. In other embodiments, the actual interference fit may be more or less than 0.05mm.

As shown in Figs 21 and 22, the tube 22 can be push-fitted into the end-fitting 224, 226. In this way an interior surface 22b of an end portion of the composite tube 22 is in frictional contact with the exterior surface 233b; and an exterior surface 22a of an end portion of the composite tube 22 is in frictional contact with the interior surface 235a. As such the ends of the composite tube 22 are sandwiched between the walls 233b, 235a of the shaped socket G provided by the end fitting 224, 226.

Beneficially, the end fitting 224, 226 is optionally provided with a chamfered lead opening which facilitates the location of and push-fitting of the circular cross-sectioned composite tube 22 into the end-fitting 224, 226. This chamfered lead opening can be seen in Fig 23; and additionally, it is clear from Fig 26, that the internal piece 233 has a narrower diameter at the open end of the end fitting 224, 226 to guide the composite tube 22 into place during assembly of the drive shaft 220.

Advantageously, the wave form shaping on the interior surface 235a and exterior surface 233b in combination with the composite tube 22 being made of a thermoplastic polymer matrix with reinforcing fibres embedded in the matrix may allow for the composite tube 22 to be push-fitted into the end-fitting 224, 226, without the need to heat the end of the composite tube 22 above room temperature and as such thermoplastic deformation of the ends of the composite tube 22 may not be necessary, thus making the composite tube 22 and end fittings 224, 226 more versatile, easier and more cost effective to assemble. Furthermore, as mentioned above, the ends of the composite tube 22 are push-fitted into the end fitting 224, 226 and an interference, of for example 0.05mm is designed into the assembly 224, 226. Each end of the composite tube 22 is therefore subject to a compressive force that mitigates against rotation of the end of the composite tube 22 within the end fitting 224, 226. Whilst not being limited to any particular theory, it is considered that the number of waves or number of peaks should be selected in dependence upon the amount of torque the shaft 20 is having to bear. Of further benefit is the fact that deformation, re-shaping and/or substantially uniform compression of the composite tube 22 does not interfere with or reduce the effectiveness of the composite tube's ability to transmit forces applied to the tube 22 to the reinforcing fibres embedded within the matrix because the structure of the composite tube 22 is retained, albeit in a slightly different shape. This is a particular benefit over prior art systems, such as that described in US 7874925 in which the composite tube is formed from a thermosetting structure, which cannot be re-shaped by deformation and which is therefore cut, on one surface only, which affects the structure's ability to transmit applied torque through all of the plies of reinforcing fibres.

It is preferable, but nevertheless optional, that the generally sinusoidal wave form pattern provided by the shaped socket of the end fittings 224, 226, at least in cross-section is a symmetrical wave form of uniform pitch and uniform amplitude. However, in other applications the wave form may have a more complex form with non-uniform pitch and/or non-uniform amplitude. It is also preferable that once deformed, the "plug"-end of the composite tube 20 has, at least in cross-section, a generally uniform thickness. It is anticipated however that along the length of the shaped socket, the wave form may become progressively larger and such an embodiment is described further below.

Turning now to Figs 31 to 33, there is shown a two-piece end fitting assembly 324, 326 that is similar to that shown in Figs 20 to 30, which additionally comprises axial retaining means in the form of barbs B provided circumferentially about the shaped internal plug 333.

As can be seen in Fig 31, which provides a cross-section through a two-part end fitting 324, 326 of the present embodiment, towards the bottom end of the internal plug 333, a series of circumferentially arranged barbs B have been cut into the exterior surface 333b of the second piece 333. Fig 32 is a side view of a shaped internal plug 333 comprising the axial retaining means in the form of barbs provided circumferentially about a bottom end of the internal plug. As shown by the perspective view of Fig 33, the internal plug 333 is provided with the circumferential undulations (sinusoidal wave form) provided along a substantial portion (length) of an exterior surface 333b of the internal plug 333 and is provided with a plurality of rings of barbs provided circumferentially about a bottom portion of the external surface of the internal plug. The barbs B may cut into the composite tube 22 and may assist in preventing it from inadvertently being pulled-out of the end-fitting 324, 326.

Turning now to Figs 34 - 36, there is shown an end fitting of another embodiment, wherein the end fitting 424, 426 provides a shaping socket into which a composite tube can be interference-fitted and by which the end of the composite tube can be re-shaped such that the composite tube end comprises a matching "plug"-shaped end. Again, the shaped socket provided by the end fitting 424, 426 is shaped in a generally sinusoidal wave form along at least a section of its length. Optionally, the end fitting 424, 426 is a one-piece construction. This is best illustrated by the longitudinal cross-sectional image of Fig 37. The end fitting comprises a shaped socket (G) defined by an interior surface 435a of a cylindrical outer collar 435 and by an exterior surface 433b of a cylindrical inner collar 433. The outer collar 435 and inner collar 433 are upstanding from a flanged base 405. The end fitting 424, 426 may be moulded, cast or optionally formed by additive layer manufacturing (ALM; also known as 3-D printing).

The end fitting 424, 426 is shown in perspective view in Fig 38, wherein it can be seen that the one-piece configuration also comprises a chamfered lead-in to facilitate the forceful push-fit of a composite tube 22 into the shaped annular socket of the end fitting 424, 426. Again in this arrangement the circumferentially arranged wave form is generally sinusoidal and is repeated along a substantial portion of the length of the socket walls 435a, 433b. Beneficially, the composite tube 22 need not be heated to facilitate its insertion into and deformation by the wavy-shaped annular socket of the end fitting 424, 426. It is however an option that in some arrangements, for example, where an amplitude of the wave is large, for example greater than 0.7mm, that the application of some heat to the end of the composite tube 22 to enable thermoplastic and mechanical deformation may be required.

In Figs 39 to 44 a further embodiment is illustrated in which a one-piece end fitting has been created with a generally sinusoidal wave form shaped into the walls 533b, 535a of the socket, wherein the amplitude of the sinusoidal wave form is generally uniform across a circumferential section, but which progressively increases as the sinusoidal wave form is repeated in a longitudinal direction, toward the bottom of the socket.

The end-fittings 524, 526 have very accurate and complex shaped socket walls 535a, 533b and as such can be best manufactured using ALM. Beneficially, the use of a progressively developing wave formation about the socket walls 535a, 533b makes it easier to push the composite tube 22 into the end-fitting 524, 526. Optionally a chamfered and flat or smooth walled entrance is provided for a small initial section of the socket wall 535a, 533b. Then the socket wall 535a, 533b becomes more and more perturbed as the amplitude of the formed waves gradually increases. In this way the sine wave develops along the length of the end-fitting 524, 526 from a circular section at the opening O of the annulused socket, to a full sine wave at the flange end of the socket. The path length of the sine wave at the flange end of the socket may be equal to the circumference of the circular composite tube. This has the effect of reducing the overall diameter of the composite tube 22, at the (bottom) flange end of the fitting.

Further optionally and as best viewed in Fig 42, barbs B may again be provided proximate a bottom end of the shaped socket of the end fitting 524, 526. The overhang of the barbs B may be in the region of 0.2mm.

It can be appreciated that various changes may be made within the scope of the present invention, for example, the size and shape of the end fittings and sockets provided thereby may be adjusted to accommodate composite tubes of differing size or shape.

It will be recognised that as used herein, directional references such as "top", "bottom", "front", "back", "end", "side", "inner", "outer", "upper" and "lower" do not necessarily limit the respective features to such orientation, but may merely serve to clarify the relative position of certain features.

## Claims

1. A torque shaft comprising a hollow tube (22) provided with an end fitting (24, 26; 224, 226) at each end of the tube (22), wherein the tube (22) is made of a thermoplastic polymer matrix with reinforcing fibres embedded in the matrix, the end fittings (24, 26) are connected to the tube (22) by mutually complementarily shaped plug (23) and socket (27) type connections that are interference fitted by thermoplastically and/or mechanically deforming the ends of the tube (22) into contact with the end fittings (24, 26), and wherein the ends of the tube (22) are deformed such that the cross-sectional shape of the deformed ends is an undulated annulus with peaks and troughs following a generally sinusoidal wave form.

2. A torque shaft according to claim 1 wherein the ends of the tube are deformed such that an exterior surface of a deformed end and an interior surface of the deformed end are deformed in a similar and/or complementary manner to one another.

3. A torque shaft according to claim 2 wherein the tube is provided with a shaped plug and the end fittings are provided with a complementary shaped socket.

4. A torque shaft according to claim 1 wherein the amplitude between a peak and a trough of said undulated annulus shaped deformed ends is between about 0.2mm and about 0.5mm; and/or wherein a pitch between a peak and an adjacent peak of said undulated annulus shaped deformed ends is between about 12° and about 24°; and/or wherein a total number of peaks of said undulated annulus shaped deformed ends is between about 15 and about 30.

5. A torque shaft according to claim 4 wherein the ends of the tube are mechanically deformed only without the addition of heat above room temperature, and wherein the ends of the tube are push-fitted into the end fittings.

6. A torque shaft according to claim 5 wherein each end fitting comprises a socket, at least part of which has a thickness that is less than the thickness of a circular section of the composite tube, such that the end of the composite tube is interference fitted into the socket.

7. A torque shaft according to claim 6 wherein the socket is defined by an interior wall of an outer cylindrical barrel and an exterior wall of an inner cylindrical barrel, wherein the interior wall and exterior wall each have corresponding sections that are profiled into a generally sinusoidal wave form such that a cross-sectional shape of said socket is an undulated annulus with peaks and troughs following a generally sinusoidal wave form.

8. A torque shaft according to claim 7 wherein, at least a portion of the interior wall and a corresponding portion of the exterior wall have the same number of peaks, the same number of troughs and wherein the pitch between each peak on the interior wall is greater than the pitch between each peak on the exterior wall.

9. A torque shaft according to claim 8 wherein the amplitude of the general sinusoidal wave form provided on the interior wall and exterior wall gradually increases from a first amplitude proximate an open end of the socket to a maximum amplitude proximate a flanged bottom section of the end fitting housing the socket.

10. A torque shaft according to claim 9 wherein the first amplitude is zero and the depth of the socket proximate an open end of the socket is about equal to the thickness of a circular section of the composite tube; and wherein the maximum amplitude is greater than about 0.2mm such that a maximum depth of the socket proximate a flanged bottom section of the end fitting is less than the thickness of a circular section of the composite tube.

11. A torque shaft according to claim 10 wherein the maximum depth of the socket proximate a flanged bottom section of the end fitting is about 0.05mm less than the thickness of a circular section of the composite tube.

12. A torque shaft according to any of claims 3 to 11 wherein the end fittings are provided by two affixed parts: a first part comprising an outer cylindrical barrel an interior surface of which provides a first socket wall; and a second part comprising an internal plug, an exterior surface of which provides a second socket wall or wherein the end fittings are provided as a unitary one-piece construction.

13. A torque shaft according to any of claims 3 to 12 wherein a socket wall is provided with an axial retention means and wherein said axial retention means takes the form of one or more barbs projecting from a wall of the socket.

14. A method of manufacturing a torque shaft comprising the steps of
(a) providing a fibre reinforced thermoplastic polymer tube;
(b) providing an end fitting at each end of the tube;
(c) thermoplastically and/or mechanically deforming each end of the tube to form one component of a mutually complementary generally sinusoidal wave form shaped plug and socket connection;
(d) providing each end fitting with a second component of the plug and socket connection, the plug and socket being dimensioned, positioned, and arranged so as to enable an interference fit therebetween; and,
(f) forming an interference fit between the tube and each end fitting.

15. A torque shaft according to any one of claims 1 to 13 or a method according to claim 14 wherein the thermoplastic material is selected from one or more of polyetheretherketone (PEEK), polyaryletherketone (PAEK), polyetherketone (PEK), polyoxymethylene (POM), polyphenylenesulphide (PPS), polyethyleneimine (PEI), Polyacrylamide (PA), or a mixture of two or more of these thermoplastics; and/or
wherein the reinforcing fibres are selected from carbon fibres, glass fibres, a poly-paraphenylene-terephtalamide-based fibre, an aliphatic polyamide, silicon carbide coated carbon fibres, synthetic textile fibres, natural textile fibres, or metal wires, or a mixture of two or more of these reinforcing fibres; and/or
wherein the fibres are selected from continuous fibres, discontinuous fibres, chopped fibres, monofilaments, woven threads, or yarns.

## Patentansprüche

1. Verdrehwelle, die ein hohles Rohr (22) umfasst, das an jedem Ende mit einem Endanschluss (24, 26; 224, 226) versehen ist, wobei das Rohr (22) aus einer thermoplastischen Polymermatrix mit in der Matrix eingebetteten Verstärkungsfasern hergestellt ist und die Endanschlüsse (24, 26) mit dem Rohr (22) durch zueinander komplementär geformte Stecker- (23) und Buchsenverbindungen (27) verbunden sind, die durch thermoplastische und/oder mechanische Verformung der Enden des Rohrs (22) in Kontakt mit den Endanschlüssen (24, 26) mit Presspassung angebracht werden, und wobei die Enden des Rohrs (22) so verformt sind, dass die Querschnittsform der verformten Enden ein wellenförmiger Ring mit Spitzen und Tälern ist, die einer im Wesentlichen sinusartigen Wellenform folgen.

2. Verdrehwelle nach Anspruch 1, wobei die Enden des Rohrs so verformt sind, dass eine Außenfläche eines verformten Endes und eine Innenfläche des verformten Endes in ähnlicher und/oder komplementärer Weise zueinander verformt werden.

3. Verdrehwelle nach Anspruch 2, wobei das Rohr mit einem geformten Stecker bereitgestellt ist und die Endanschlüsse mit einer komplementär geformten Buchse.

4. Verdrehwelle nach Anspruch 1, wobei die Amplitude zwischen einer Spitze und einem Tal der gewellten ringförmig verformten Enden zwischen etwa 0,2 mm und etwa 0,5 mm liegt; und/oder wobei ein Abstand zwischen einer Spitze und einer benachbarten Spitze der gewellten ringförmig verformten Enden zwischen etwa 12° und etwa 24° liegt; und/oder wobei die Gesamtzahl der Spitzen der gewellten ringförmig verformten Enden zwischen etwa 15 und etwa 30 liegt.

5. Verdrehwelle nach Anspruch 4, wobei die Enden des Rohrs nur mechanisch verformt werden, und zwar ohne Wärmezufuhr oberhalb Raumtemperatur, und wobei die Enden des Rohrs in die Endanschlüsse eingeschoben werden.

6. Verdrehwelle nach Anspruch 5, wobei jeder Endanschluss eine Buchse umfasst, von der wenigstens ein Teil eine Dicke aufweist, die geringer ist als die Dicke eines kreisförmigen Querschnitts des Verbundrohrs, so dass das Ende des Verbundrohrs mit Interferenz in die Buchse eingepasst ist.

7. Verdrehwelle nach Anspruch 6, wobei die Buchse durch eine Innenwand einer äußeren zylindrischen Trommel und eine Außenwand einer inneren zylindrischen Trommel definiert ist, wobei die Innenwand und die Außenwand jeweils entsprechende Abschnitte aufweisen, die zu einer im Wesentlichen sinusartigen Wellenform geformt sind, so dass die Querschnittsform der Buchse ein wellenförmiger Ring mit Spitzen und Tälern ist, die einer im Wesentlichen sinusartigen Wellenform folgen.

8. Verdrehwelle nach Anspruch 7, wobei wenigstens ein Teil der Innenwand und ein entsprechender Teil der Außenwand die gleiche Anzahl von Spitzen und die gleiche Anzahl von Tälern aufweisen, und wobei der Abstand zwischen jeder Spitze auf der Innenwand größer ist als der Abstand zwischen jeder Spitze auf der Außenwand.

9. Verdrehwelle nach Anspruch 8, wobei die Amplitude der im Wesentlichen sinusartigen Wellenform, die an der Innen- und Außenwand bereitgestellt ist, graduell von einer ersten Amplitude nahe eines offenen Endes der Buchse bis zu einer maximalen Amplitude nahe eines geflanschten unteren Abschnitts des Endanschlusses, der die Buchse aufnimmt, zunimmt.

10. Verdrehwelle nach Anspruch 9, wobei die erste Amplitude gleich Null ist und die Tiefe der Buchse in der Nähe eines offenen Endes der Buchse etwa gleich der Dicke eines kreisförmigen Querschnitts des Verbundrohrs ist; und wobei die maximale Amplitude größer als etwa 0,2 mm ist, so dass die maximale Tiefe der Buchse in der Nähe eines geflanschten unteren Abschnitts des Endanschlusses geringer ist als die Dicke eines kreisförmigen Querschnitts des Verbundrohrs.

11. Verdrehwelle nach Anspruch 10, wobei die maximale Tiefe der Buchse in der Nähe eines geflanschten unteren Abschnitts des Endanschlusses etwa 0,05 mm weniger ist als die Dicke eines kreisförmigen Abschnitts des Verbundrohrs.

12. Verdrehwelle nach einem der Ansprüche 3 bis 11, wobei die Endanschlüsse durch zwei befestigte Teile bereitgestellt werden: einem ersten Teil, das eine äußere zylindrische Trommel umfasst, deren Innenfläche eine erste Buchsenwand bereitstellt; und einem zweiten Teil, das einen internen Stecker umfasst, dessen Außenfläche eine zweite Buchsenwand bereitstellt oder wobei die Endanschlüsse als einheitliche einteilige Konstruktion bereitgestellt sind.

13. Verdrehwelle nach einem der Ansprüche 3 bis 12, wobei eine Buchsenwand mit einer axialen Rückhalteeinrichtung bereitgestellt ist und wobei die axiale Rückhalteeinrichtung die Form eines oder mehrerer Widerhaken hat, die von einer Wand der Buchse hervorstehen.

14. Verfahren zur Herstellung einer Verdrehwelle mit den folgenden Schritten:
(a) Bereitstellen eines faserverstärkten thermoplastischen Polymerrohrs;
(b) Bereitstellen eines Endanschlusses an jedem Ende des Rohrs;
(c) thermoplastische und/oder mechanische Verformung eines jeden Endes des Rohrs, um eine Komponente von einer sich gegenseitig ergänzenden, im Wesentlichen sinusartigen Wellenform der Stecker- und Buchsenverbindung auszubilden;
(d) Bereitstellen einer zweiten Komponente der Stecker- und Buchsenverbindung für jedes Endstück, wobei der Stecker und die Buchse so dimensioniert, positioniert und angeordnet sind, dass eine Presspassung dazwischen möglich ist; und
(f) Ausbilden einer Presspassung zwischen dem Rohr und jedem Endanschluss.

15. Verdrehwelle nach einem der Ansprüche 1 bis 13 oder einem Verfahren nach Anspruch 14, wobei das thermoplastische Material ausgewählt ist aus einem oder mehreren von Polyetheretherketon (PEEK), Polyaryletherketon (PAEK), Polyetherketon (PEK), Polyoxymethylen (POM), Polyphenylensulfid (PPS), Polyethylenimin (PEI), Polyacrylamid (PA) oder einer Mischung von zwei oder mehreren dieser Thermoplaste; und/oder
wobei die Verstärkungsfasern ausgewählt sind aus Kohlenstofffasern, Glasfasern, einer Faser auf Polyparaphenylen-Terephtalamid-Basis, einem aliphatischen Polyamid, mit Siliciumcarbid beschichteten Kohlenstofffasern, synthetischen Textilfasern, natürlichen Textilfasern oder Metalldrähten oder einer Mischung aus zwei oder mehreren dieser Verstärkungsfasern; und/oder
wobei die Fasern ausgewählt sind aus Endlosfasern, diskontinuierlichen Fasern, geschnittenen Fasern, Monofilamenten, gewebten Fäden oder Garnen.

## Revendications

1. Arbre de torsion comprenant un tube (22) creux pourvu d'un raccord d'extrémité (24, 26; 224, 226) à chaque extrémité tu tube (22), dans lequel le tube (22) est constitué d'une matrice polymère thermoplastique avec des fibres de renfort noyées dans la matrice, les raccords d'extrémité (24, 26) sont reliés au tube (22) par des systèmes de liaison de type mâle et femelle, de forme mutuellement complémentaire, qui sont montés avec ajustement serré, par déformation thermoplastique et/ou mécanique déformant les extrémités du tube (22), afin de les amener en contact avec les raccords d'extrémité (24, 26), et dans lequel les extrémités du tube (22) sont déformées de manière à ce que la forme de section transversale des extrémités déformées soit un anneau ondulé avec des crêtes et des creux qui suivent une forme d'onde sensiblement sinusoïdale.

2. Arbre de torsion selon la revendication 1, dans lequel les extrémités du tube sont déformées de manière à ce qu'une surface extérieure d'une extrémité déformée et une surface intérieure de l'extrémité déformée soient déformées d'une façon similaire et/ou complémentaire l'une avec l'autre.

3. Arbre de torsion selon la revendication 2, dans lequel le tube est doté d'un élément mâle profilé, et les raccords d'extrémité sont pourvus d'un élément femelle de forme complémentaire.

4. Arbre de torsion selon la revendication 1, dans lequel l'amplitude entre une crête et un creux desdites extrémités déformées en anneau ondulé est comprise entre environ 0,2 mm et environ 0,5 mm ; et/ou dans lequel un pas entre une crête et une crête adjacente desdites extrémités déformées en anneau ondulé est compris entre environ 12° et environ 24° ; et/ou dans lequel un nombre total de crêtes desdites extrémités déformées en anneau ondulé est compris entre environ 15 et environ 30.

5. Arbre de torsion selon la revendication 4, dans lequel les extrémités du tube sont déformées uniquement par voie mécanique, sans apport de chaleur au-delà de la température ambiante, et dans lequel les extrémités du tube sont montées par ajustage gras dans les raccords d'extrémité.

6. Arbre de torsion selon la revendication 5, dans lequel chaque raccord d'extrémité comprend un élément femelle dont au moins une partie présente une épaisseur qui est inférieure à l'épaisseur d'une portion circulaire du tube composite, de manière à ce que l'extrémité du tube composite soit montée avec ajustement serré dans l'élément femelle.

7. Arbre de torsion selon la revendication 6, dans lequel l'élément femelle est défini par une paroi intérieure d'un fût cylindrique extérieur et une paroi extérieure d'un fût cylindrique intérieur, dans lequel la paroi intérieure et la paroi extérieure présentent chacune des portions correspondantes qui sont façonnées pour avoir une forme d'onde sensiblement sinusoïdale, de manière à ce qu'une forme de section transversale dudit élément femelle soit un anneau ondulé avec des crêtes et des creux qui suivent une forme d'onde sensiblement sinusoïdale.

8. Arbre de torsion selon la revendication 7, dans lequel au moins une partie de la paroi intérieure et une partie correspondante de la paroi extérieure ont le même nombre de crêtes et le même nombre de creux, et dans lequel le pas entre chaque crête sur la paroi intérieure est plus grand que le pas entre chaque crête sur la paroi extérieure.

9. Arbre de torsion selon la revendication 8, dans lequel l'amplitude de la forme d'onde sensiblement sinusoïdale prévue sur la paroi intérieure et la paroi extérieure augmente progressivement à partir d'une première amplitude, à proximité d'une extrémité ouverte de l'élément femelle, jusqu'à une amplitude maximale, à proximité d'une partie de fond à collerette du raccord d'extrémité contenant l'élément femelle.

10. Arbre de torsion selon la revendication 9, dans lequel la première amplitude est de zéro et la profondeur de l'élément femelle, à proximité d'une extrémité ouverte de l'élément femelle, est à peu près égale à l'épaisseur d'une portion circulaire du tube composite ; et dans lequel l'amplitude maximale est supérieure à environ 0,2 mm, de manière à ce qu'une profondeur maximale de l'élément femelle, à proximité d'une partie de fond à collerette du raccord d'extrémité, soit inférieure à l'épaisseur d'une portion circulaire du tube composite.

11. Arbre de torsion selon la revendication 10, dans lequel la profondeur maximale de l'élément femelle, à proximité d'une partie de fond à collerette du raccord d'extrémité, est inférieure d'environ 0,05 mm à l'épaisseur d'une portion circulaire du tube composite.

12. Arbre de torsion selon l'une quelconque des revendications 3 à 11, dans lequel les raccords d'extrémité sont constitués de deux pièces attachées : une première pièce comportant un fût cylindrique extérieur dont une surface intérieure forme une première paroi d'élément femelle ; et une deuxième pièce comportant un élément mâle intérieur dont une surface extérieure forme une deuxième paroi d'élément femelle, ou dans lequel les raccords d'extrémité sont prévus sous la forme d'une structure monobloc réalisée d'une seule pièce.

13. Arbre de torsion selon l'une quelconque des revendications 3 à 12, dans lequel une paroi d'élément femelle est pourvue d'un moyen de retenue axial, et dans lequel ledit moyen de retenue axial prend la forme d'une ou plusieurs barbelures faisant saillie à partir d'une paroi de l'élément femelle.

14. Procédé de fabrication d'un arbre de torsion, comprenant les étapes suivantes :
(a) préparation d'un tube en polymère thermoplastique renforcé par des fibres ;
(b) préparation d'un raccord d'extrémité à chaque extrémité du tube ;
(c) déformation thermoplastique et/ou mécanique de chaque extrémité du tube, pour former un composant d'un système de liaison de type mâle et femelle en forme d'onde sensiblement sinusoïdale, mutuellement complémentaire ;
(d) équipement de chaque raccord d'extrémité d'un deuxième composant du système de liaison de type mâle et femelle, les éléments mâle et femelle étant dimensionnés, positionnés et agencés de manière à permettre un ajustement serré entre eux ; et
(f) réalisation d'un ajustage serré entre le tube et chaque raccord d'extrémité.

15. Arbre de torsion selon l'une quelconque des revendications 1 à 13, ou procédé selon la revendication 14, où le matériau thermoplastique est choisi parmi une ou plusieurs des matières suivantes : po-lyéther-éther-cétone (PEEK), polyaryléthercétone (PAEK), polyéther-cétone (PEK), polyoxyméthylène (POM), poly(phénylène sulfure) (PPS), polyéthylènimine (PEI), polyacrylamide (PA), ou un mélange de deux ou plusieurs de ces thermoplastiques ; et/ou
dans lequel les fibres de renforcement sont choisies parmi des fibres de carbone, des fibres de verre, une fibre à base de poly-paraphé-nylène-téréphtalamide, un polyamide aliphatique, des fibres de carbone enrobées de carbure de silicium, des fibres en textiles synthétiques, des fibres en textiles naturels ou des fils métalliques ou un mélange de deux ou plusieurs de ces fibres de renforcement ; et/ou
dans lequel les fibres sont choisies parmi des fibres continues, des fibres discontinues, des fibres coupées, des monofilaments, des fils tissés ou des filés.
